# EUROPEAN PATENT APPLICATION

(11) **EP 4 588 353 A1**
(43) Date of publication of application: **23.07.2025**
(21) Application number: 24152462.8
(22) Date of filing: 17.01.2024
(51) Int. Cl.: A23G 1/34, A23L 19/00

(54) **PROCESS FOR THE PRODUCTION OF CAROB POWDER**

(71) Applicant: Foreverland Food Srl, 70014 Conversano (BA) (IT)
(72) Inventor: BOTTIROLI, Riccardo, 27058 Voghera (PV) (IT); BROCHETTA, Massimo, 27058 Voghera (PV) (IT)
(74) Representative: Di Giovine, Paolo

(57) **Abstract**

The present invention relates to a method for the preparation of a carob powder, in particular a carob powder with a low content of butanoic acid, which can be used as base ingredient characterized by a color, sensory profile, and volatile compounds similar to cocoa powder. Furthermore, the present invention relates to a carob powder characterized by a low content of caffeine and theobromine, plant-based, allergen-free, high in fiber, and low in fat. Moreover, the present invention relates to the use of the carob powder for replacing up to 100% of powdered roasted cocoa and in products based on or containing chocolate and in various forms (powder, liquid, solid).

## Description

### FIELD OF THE INVENTION

The present invention relates to a method for the preparation of a carob powder, in particular a carob powder with a low content of butanoic acid, which can be used as base ingredient characterized by a color, sensory profile, and volatile compounds similar to cocoa powder. Furthermore, the present invention relates to a carob powder characterized by a low content of caffeine and theobromine, plant-based, allergen-free, high in fiber, and low in fat. Moreover, the present invention relates to the use of the carob powder for replacing up to 100% of powdered roasted cocoa and in products based on or containing cocoa and in various forms (powder, liquid, solid).

### BACKGROUND OF THE INVENTION

Cocoa is an important agricultural commodity and the key raw material in chocolate manufacturing. Cacao tree (Theobroma cacao L.) is cultivated in humid, warm and rainy areas located between 20 degrees south and 20 degrees north of the equator. Cocoa cultivation requires a large amount of water (1000-4000 mm/year) and it is sensitive to periods of excessive rain or drought. The demand for cocoa beans has been increasing from about 4.6 billion tonnes in 2016 to 5.7 billion tonnes in 2020 (FAOSTAT, 2023), resulting in deforestation of large wildlife areas. Cocoa is largely produced in developing countries, but it is mostly consumed in developed countries. The main cocoa growing areas are West Africa, South-East Asia and South America and the major cocoa producing countries are Ivory Coast, Ghana, Indonesia, Nigeria, Cameroon, Brazil, Ecuador, the Dominican Republic and Malaysia. Some of these countries are affected by instability due to political and social changes. Moreover, besides strong socio-economic problems, cocoa beans need to undergo very long transportations which greatly increases the cost and the carbon footprint of the final product (Boeckx P. et al., 2020).

Accordingly, the increasing demand for cocoa, its rising price and the environmental impact of cocoa production urges the discovery of cocoa powder substitutes. In this context, a potential substitute is carob. Carob is a local crop of the Mediterranean area, mostly grown in Spain, Italy and Portugal (Brassesco et al. 2021). Differently from cocoa trees, Ceratonia siliqua (carob tree) is a xerophytic (drought-resistant) species (water requirement between 250 and 500 mm/year) well adapted to the Mediterranean region's ecological conditions. Given the rising climatic crisis, this plant requires low water inputs and pests treatments. Currently, the seeds from carob pods are used for the production of locust bean gum (LBG, E-410), a thickening agent and stabilizer in foods, whereas the pulp and pods are either discarded or used for animal feed so far.

At research level, the employment of carob pods and pulp as a valuable cocoa replacer is currently under investigation by researchers in different product applications such as chocolate, milk chocolate drinks and gluten-free cakes. In the chocolate application studied by Akdeniz et al. (2021), despite the development of chocolate using carob instead of cocoa appeared feasible, an increasing replacement of cocoa with carob significantly decreased the overall product acceptability, with chocolate including 80% carob powder having the lowest among the tested samples.

This means that, although carob is a promising candidate to replace cocoa in chocolate-like formulation, there is a need to provide a method for the preparation of a carob powder to be used as food ingredient without the disadvantages of the prior art.

### SUMMARY OF THE INVENTION

The technical problem addressed and solved by the present invention is to provide a carob powder, in particular a carob powder with a low content of butanoic acid, and a method for its preparation that yields a semi-finished product with a color, sensory profile, and volatile compounds similar to cocoa powder. This ingredient aims to replace cocoa in various food products, including chocolate, chocolate-based snacks, cocoa-based and chocolate-based drinks. This problem is solved by the present invention. Advantageously, the authors of the present invention have discovered that the perfected method described here allows for the preparation of a carob powder with a reduced environmental impact. Compared to methods described in prior art documents, the method presented here has the significant advantage of producing an ingredient capable of replacing cocoa powder. Compared to carob powders already available on the market, the Authors of the present invention have surprisingly found that by subjecting carob or carob material to a step of incubation in water, this allows to reduce the concentration of butanoic acid, which has a tangy, rancid or cheesy odor.

Furthermore, the carob powder of the present invention offers a remarkable nutritional composition, particularly with a high fiber content and low fat content. In particular, the product resulting from the present invention, obtained through the claimed method, has a naturally higher content of sugars compared to commercially available cocoa powder.

This makes it suitable for the production of low-sugar chocolate-like products, with up to 100% less added sugars compared to existing products. Further advantages, features, and methods of use of the invention will become apparent from the following detailed description of some exemplary embodiments, provided for illustrative purposes and not limiting.

Hence, objects of the present invention are:
a method for preparing a carob powder, in particular a carob powder with a low content of butanoic acid, comprising the following steps:
   i) incubating carob or carob material in water,
   ii) removing water from the product incubated with water in step i);
   iii) roasting the product after removing water in step ii).
a carob powder characterized by a concentration of butanoic acid less than mg/g; use of a carob powder according to the present invention in the preparation of food products or beverages preferably as a cocoa powder replacer in the preparation of food products or beverages, more preferably a chocolate, a dark chocolate or a milk chocolate, a cocoa-free chocolate, a vegan cocoa-free chocolate, snacks, biscuits, coatings, fillings, ganaches, mousses, puddings, chocolate drinks.
a food product or beverage comprising the carob powder according to the present invention preferably wherein said food product or beverage is chocolate, preferably a dark chocolate or a milk chocolate, a cocoa-free chocolate, a vegan cocoa-free chocolate, snacks, biscuits, coatings, fillings, ganaches, mousses, puddings, chocolate drinks.

In each part of the present description, the term "comprising" can be replaced by the term "consisting of".

Further advantages and/or embodiments of the present invention will be evident from the following detailed description.

### DETAILED DESCRIPTION OF THE FIGURES

The present invention and the following detailed description of preferred embodiments can be better understood with reference to the following figures:
**Figure 1****:** Summary graph of a preparation method to obtain a carob powder characterized by a color, sensory characteristics, and volatile compounds similar to cocoa powder.
**Figure 2****:** Graphs showing the different levels of two compounds, butanoic acid (2A) and 3-furaldehyde (2B) among raw carob, two reference roasted cocoa powder (CONTROL 1 and CONTROL 2) and CBI roasted at different combination of time and temperature.
**Figure 3****:** Focus on butanoic acid as characterizing factor of the present invention compared to the competition (namely commercial carob powder ingredients)

### GLOSSARY

Before the methods of the present disclosure are described in greater detail, it is to be understood that the methods are not limited to particular embodiments described, as such may, of course, vary. It is also to be understood that the terminology used herein is for the purpose of describing particular embodiments only and is not intended to be limiting.

Where a range of values is provided, it is understood that each intervening value, to the tenth of the unit of the lower limit unless the context clearly dictates otherwise, between the upper and lower limit of that range and any other stated or intervening value in that stated range, is encompassed within the methods. The upper and lower limits of these smaller ranges may independently be included in the smaller ranges and are also encompassed within the methods, subject to any specifically excluded limit in the stated range. Where the stated range includes one or both of the limits, ranges excluding either or both of those included limits are also included in the methods. Certain ranges may be presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number. Specifically, the term "about" in reference to a measurement, such as roasting time and temperature, indicates an estimate of plus or minus 0.5 from the indicated value.

According to the present invention, the term "carob" means the fruit of Ceratonia siliqua, including both seeds and siliques.

According to the present invention, the term "carob material" means a product derived by carob pods using physical manipulation, i.e. grinding, cutting and crushing into pieces, reducing to powder, drying and mechanical separation of the pulp from the seeds. The carob used in the preparation process is preferably carob commonly used in the food industry, obtained from mature carob pods.

The term carob pulp means that the pods are dried to remove some of the moisture, and the seeds are separated from the rest of the fruit to obtain carob pulp.

The term carob pieces means that the carob has been cutted and crushed into pieces. The term carob powder means a carob or a carob pulp which has been grinded or reduced to powder.

### DETAILED DESCRIPTION OF THE INVENTION

Unless defined otherwise, all technical and scientific terms used herein have the same meaning as commonly understood by one of ordinary skills in the art to which the methods belong. Although any methods similar or equivalent to those described herein can also be used in the practice or testing of the methods, representative illustrative methods and materials are now described.

It is appreciated that certain features of the methods, which are, for clarity, described in the context of separate embodiments, may also be provided in combination in a single embodiment. Conversely, various features of the methods, which are, for brevity, described in the context of a single embodiment, may also be provided separately or in any suitable sub-combination. All combinations of the embodiments are specifically embraced by the present invention and are disclosed herein just as if each and every combination was individually and explicitly disclosed, to the extent that such combinations embrace operable processes and/or devices/systems/kits. In addition, all sub-combinations listed in the embodiments describing such variables are also specifically embraced by the present methods and are disclosed herein just as if each and every such sub-combination was individually and explicitly disclosed herein.

As will be apparent to those of skill in the art upon reading this disclosure, each of the individual embodiments described and illustrated herein has discrete components and features which may be readily separated from or combined with the features of any of the other several embodiments without departing from the scope or spirit of the present methods. Any recited method can be carried out in the order of events recited or in any other order which is logically possible.

The Authors of the present invention have surprisingly found that by subjecting carob or carob material to a step of incubation in water, this allows to reduce the concentration of butanoic acid, which has a tangy, rancid or cheesy odor.

According to a first aspect there is provided a method for preparing a carob powder, in particular a carob powder with a low content of butanoic acid, comprising the following steps:
i) incubating carob or carob material in water,
ii) removing water from the product incubated with water in step i);
iii) roasting the product obtained after removing water in step ii).

In an embodiment, said carob material is carob pulp, carob pieces and/or carob powder. When said carob material is a carob powder, a semi-liquid mixture is obtained. According to the present invention, a semi-liquide mixture refers to a substance that has properties of both a liquid and a solid, with a consistency that is not completely fluid like a typical liquid, yet not as solid as a traditional solid material. Examples of semi-liquid mixtures include thick suspensions, i.e. mixtures where solid particles are dispersed in a liquid, slurries, i.e. mixtures of a solid and a liquid, where the solid particles are suspended in the liquid but have not fully dissolved, resulting in a semi-liquid texture, mud or sludge, pastes.

In an embodiment, the incubating step i) is carried out at a temperature of at least 30°C, preferably at least 35°C, at least 40°C, at least 45°C or at least 50°C, more preferably from 50 to 60°C, and/or for a time of at least 5 minutes, preferably at least 10 minutes, 15 minutes, 20 minutes, 25 minutes, 30 minutes, 35 minutes, 40 minutes, 45 minutes, 50 minutes, 55 minutes or at least 60 minutes, more preferably from 60 to 90 minutes. In a preferred embodiment, in the incubation step, water is in a carob powder-to-water ratio from 1:0,1 to 1:20, preferably at least 1:0,2, at least 1:0,3, at least 1:0,4, or at least 1:0,5 or from 10 to 90% w/w to the total weight of the mixture, preferably of 1:3, or in a concentration of 75% w/w with respect to the total weight of the mixture.

In the present invention, removing water means eliminating at least 90% of water (or humidity) in the product incubated with water, preferably at least 95% of water, still more preferably at least 99% of water. In an embodiment, the step of removing water is carried out by filtration or by drying. In an embodiment, said filtration is carried out by means of a filter having mesh diameter suitable to remove water from the product obtained in step i). In another embodiment, said drying step is carried out to remove part of the moisture and obtain a product with suitable physicochemical characteristics for subsequent preparation stages. Preferably, the drying steps are carried out at moderate temperatures, i.e. a temperature of less than 70°C, to avoid premature modifications in color, aroma, rheological properties, and physicochemical characteristics of the carob-based functional ingredient caused by chemical reactions catalyzed by exposure to high temperatures and reduced water activity (Maillard reaction). According to a preferred embodiment of the invention, to maximize the dehydration of the mixture, the drying process is divided into three consecutive phases:
- Phase 1: Drying for 30-60 minutes at 30-40°C
- Phase 2: Drying for 180-240 minutes at 40-50°C
- Phase 3: Drying for 180-240 minutes at 50-60°C

Non-limiting examples of systems for carrying out the drying process are sun drying (solar drying), air drying, freeze drying (lyophilization), spray drying, drum drying, vacuum drying, microwave drying, fluidized bed drying, infrared drying, osmotic dehydration, radiant energy drying, tunnel drying, belt drying, convection drying, sublimation drying. In an embodiment, the drying step is carried out by oven drying. Oven drying is a common industrial drying process, involving using conventional ovens or drying chambers to remove moisture from food products.

In a preferred embodiment, said roasting step iii) is carried out at least for 10 minutes and at a temperature of at least 90°C, preferably at least 95°C, more preferably at least 100°C.

Roasting is employed to promote a series of chemical reactions that contribute to the characteristic sensory attributes and color of the carob or carob material. During the roasting process, high temperatures induce the Maillard reaction, which involves sugars and proteins present in the ingredients. This reaction produces a range of chemical compounds, including aldehydes, ketones, and heterocyclic compounds, responsible for the distinctive aroma and flavor associated with roasting. Furthermore, the roasting process promotes the caramelization of carbohydrates present in the mixture. Non-limiting examples of systems for carrying out the roasting step comprise drum roasting, fluidized bed roasting, centrifugal roasting, hot air roasting, infrared roasting, microwave roasting, open fire roasting, electromagnetic roasting, convection roasting, direct flame roasting, indirect roasting, recirculating air roasting, multi-stage roasting, solar roasting, combination roasting.

In an embodiment, said roasting step is carried out by convection roasting, also known as over roasting.

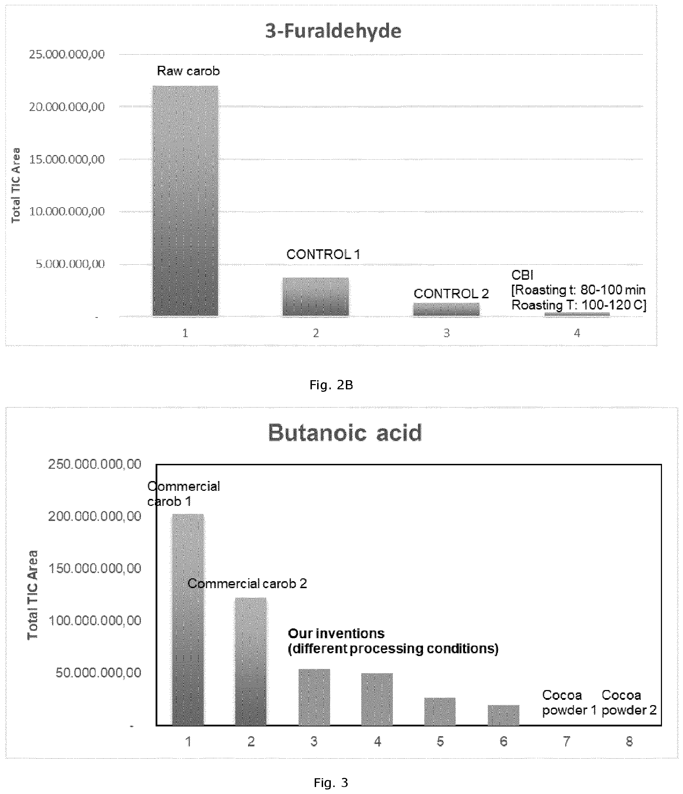

Based on different embodiments of the invention, the specific combination of time and temperature applied to the carob or to the carob material, determines a series of distinct aromatic and sensory properties, as well as an appearance that resembles cocoa powder. This key aspect of the invention is demonstrated through an in-depth analysis of volatile compounds using the headspace solid-phase microextraction gas chromatography mass spectrometry (HS-SPME GC-MS) technique. This analytical method has been applied to detect, quantify, and compare the presence and level of volatile compounds characterizing cocoa in the carob powders treated with proteolytic enzymes, comparing them with standard commercial references (Figure 3). Moreover, in support of the GC-MS data, sensory analysis and instrumental color analysis have also been performed and considered. A roasting temperature of at least 90°C, preferably ranging between 100 - 200 °C, combined with a roasting time of at least 10 minutes, preferably ranging between 10 and 100 min, provided a vast array of features mimicking different types of cocoas.

In one embodiment, the method comprises a step of grinding of the carob or carob material, before or after said roasting step. The grinding step is done to facilitate the subsequent process steps by maximizing hydration of the contact surface and allows to improve the hydration of carob when water is added. The particle diameter of the resulting grinded carob ranges from approximately 0.30 mm to 1.25 mm. Hence, in an embodiment, the grinded carob powder obtained after said grinding step is characterized by particles having an average diameter from about 0.30 mm to about 1.25 mm.

In an embodiment, the method comprises a step of reducing the roasted carob or carob material to a particle diameter from 0,1 to 100 micron. In a preferred embodiment, said step of reducing the particle diameter from 0,1 to 100 micron is a micronizing step. In a preferred embodiment of the invention cryo-milling is used to micronize the ingredient, whereas according to other embodiments of the invention other techniques are used to obtain a fine powder.

In a preferred embodiment, the method of the present invention comprises a step of performing an enzymatic treatment of said carob or carob material, during, before or after said step ii) of incubation, thereby obtaining a digested carob or carob material. The enzymatic treatment step allows to obtain a carob with selected sensorial characteristic of taste and smell.

In an embodiment, said enzymatic treatment is carried out by incubating said carob or carob material in contact with an enzyme mixture. In a preferred embodiment, said enzymatic treatment is carried out at a temperature from 50 to 60°C, and/or for a time from 60 to 90 minutes.

In an embodiment, said enzymatic treatment is a proteolytic enzymatic treatment.

In a preferred embodiment, when said enzymatic treatment is a proteolytic enzymatic treatment, said enzyme mixture comprises food-grade proteases. Food-grade proteases useful for the present invention comprises plant proteases, fungal proteases, microbial proteases, animal proteases, thermophilic proteases, and alkaline proteases or a mixture thereof.

Non-limiting examples of proteases suitable for the present invention are plant proteases such as papain, fungal proteases such as ficin and bromelain; microbial proteases such as subtilisin, alkalase, neutrase, protease 600 L, flavourzyme; and animal proteases such as pepsin.

In a preferred embodiment, said protease is a microbial protease. Preferably, said microbial protease is alkalase.

Proteolytic enzymatic treatment refers to the use of enzymes that break down proteins, known as proteases or peptidases, to facilitate various biological or industrial processes. The choice of enzyme and the conditions under which it operates depend on the desired outcome and the specific application. In a preferred embodiment, the proteolytic enzyme is dosed at a concentration of approximately 0,1 to 3% w/w with respect to the total weight of the mixture, preferably at a concentration of approximately 1.0% of the protein content of the carob powder (w/w). In general, the protein content of carob ranges from 2-10% of the total (w/w).

In a preferred embodiment, the enzymatic treatment can be conducted through incubation at a constant temperature using a continuous agitation system. In a preferred embodiment, at the end of the incubation period, the activity of the proteolytic enzyme can be deactivated to stop the proteolytic reaction. The enzyme deactivation can be achieved through various methodologies, including thermal denaturation, use of chemical inhibitors, modification and/or inhibition of key amino acids responsible for the catalytic activity of the enzyme. According to a preferred embodiment of the invention, the proteolytic enzyme is deactivated through thermal denaturation. In an embodiment, said thermal denaturation is carried out by exposing the sample treated, i.e. carob or carob material, and enzyme mixture to a temperature of 90-100°C for 5-15 minutes.

In another embodiment, the method of the invention, further includes pH correction of the grinded carob powder to which water has been added, to the optimal value for the enzyme's proteolytic activity. In a preferred embodiment, said enzymatic treatment is performed at a pH in a range from 6 to 9, preferably from 6.60 to 6.80.

Examples of combinations of temperature and time in the roasting step which led to the desired aromatic and sensory properties in the following invention are:
If the enzymatic treatment step is carried out:
   1) Temperature roasting = 110 °C
      Time roasting = 60 min
   2) Temperature roasting = 110 °C
      Time roasting = 120 min
   3) Temperature roasting = 145 °C
      Time roasting = 55 min
   4) Temperature roasting = 180 °C
      Time roasting = 20 min
   5) Temperature roasting = 180 °C
      Time roasting = 90 min;
If the enzymatic treatment is not carried out:
   1) Temperature roasting = 110 °C
      Time roasting = 60 min
   2) Temperature roasting = 110 °C
      Time roasting = 120 min
   3) Temperature roasting = 145 °C
      Time roasting = 55 min
   4) Temperature roasting = 180 °C
      Time roasting = 20 min
   5) Temperature roasting = 180 °C
      Time roasting = 90 min.

Every combination of roasting temperature and time listed above resulted in a specific application in order to make a chocolate substitute with more or less roasted and toasted flavor.

In a preferred embodiment, the method of the present invention comprises the following consecutive steps:
i) grinding carob or carob material in order to obtain a grinded carob powder;
ii) incubating said grinded carob powder in water;
iii) removing water from the product incubated with water in step ii);
iv) roasting the product after removing water in step ii).

In a more preferred embodiment, the method of the present invention comprises the following consecutive steps:
i) grinding carob or carob material in order to obtain a grinded carob powder;
ii) incubating said grinded carob powder in water;
iii) performing an enzymatic treatment of said carob powder;
iv) removing water from the product treated with the enzymatic treatment in step iii);
v) roasting the product after removing water in step iv);
vi) micronizing the roasted grinded carob powder obtained in step v).

Each step can be carried out according to any of the embodiments of the method of the present invention.

In a more preferred embodiment, the method of the present invention comprises the following consecutive steps:
i) grinding carob or carob material in order to obtain a grinded carob powder;
ii) incubating said grinded carob powder in water and performing an enzymatic treatment of said carob powder at a temperature from 50 to 60°C, and for a time from 60 to 90 minutes, wherein said water is in a weight ratio of carob powder/water from 1:0,1 to 1:100, preferably in a ratio of 1:3;
iv) removing water from the product treated with the enzymatic treatment in step iii) carrying out a drying step comprising the following phases:
   i) first drying for a time from 30 to 60 minutes, at a temperature from 30 to 40°C; and
   ii) second drying for a time from 180 to 240 minutes at a temperature from 40 to 50°C,
   iii) third drying the mixture for a time from 180 to 240 minutes at a temperature from 50 to 60°C;
v) roasting the product after removing water in step iv) for a time of at least 10 minutes and/or a temperature of at least 90°C, preferably at least 95°C, more preferably at least 100°C;
vi) micronizing the roasted grinded carob powder obtained in step v).

Further object of the present invention is a carob powder characterized by a concentration of butanoic acid less than 0.15 mg/g of carob powder, preferably less than 0.10 mg/g, less than 0.5 mg/g. In an embodiment, the carob powder is characterized by a concentration of butanoic acid less than 0.15, 0.14, 0.13, 0.12, 0.11, 0.10, 0.09, 0.08, 0.07, 0.06, 0.05, 0.04, 0.03, 0.02 or 0.01 mg/g of carob powder or less than 90, 80, 70, 60, 50, 40, 30, 20, 10 or 1 µg/g of carob powder. In an embodiment, the concentration in mg/g of butanoic acid in the carob powder is measured by Gas-Chromatography. In a preferred embodiment, said Gas-Chromatography is Gas-Chromatography Mass Spectrometry GC-MS, more preferably headspace solid phase microextraction coupled with gas chromatography-mass spectrometry (HS-SPME-GC-MS). Butanoic acid is pungent flavors to food products. Research describes the odor of the compound as tangy, rancid or cheesy. It occurs naturally in various food products and is responsible for the characteristic smell of rancid butter and parmesan cheese for example, as product of anaerobic fermentation. In cocoa powder however, butanoic acid is undesired because it may alter negatively the sensory properties of the resulting chocolate. When the concentration of butanoic acid is determined by GC-MS, for the graphical elaboration of the results (Figure 3), data is considered as total ion current Area (TIC). The Total Ion Current (TIC) is a plot of the total ion current detected by the mass spectrometer as a function of time during the chromatographic run. The TIC area is the integral of this TIC curve over the entire chromatographic run. It represents the total abundance of ions detected and provides an overall measure of the total analyte signal in the mass spectrometric analysis. The ratio between the area measured in GC indicates that the concentration of butanoic acid is very low, and in particular is less than 0.15 mg/g of carob powder, preferably less than 0.10 mg/g or than 0.05 mg/g of carob powder.

The present invention also provides a carob powder characterized by a fiber content ranging from 20% to 40% w/w, and/or a fat content ranging from 0.1% to 5% w/w, and/or a sugar content ranging from 30% to 50% w/w, and/or a protein content ranging from 1% to 10% w/w.

The present invention also provides a carob powder characterized by a low content of caffeine and theobromine and it is also plant-based, allergen-free, high in fiber, and low in fat.

The present invention also provides a carob powder characterized by a color with a L* parameter of 25 to 35, preferably 30.90, an a* parameter of 5 to 15, preferably 9.04, and a b* parameter of 15 to 25, preferably 19.41, expressed using the CIELAB color system.

The present invention also provides a carob powder characterized in that it has a 3-furaldehyde concentration lower compared to raw carob. 3-Furaldehyde is another typical VOC reported in cocoa or chocolate. The compounds can provide almond-like odor to food products.

In an embodiment, the carob powder of the present invention characterized by a concentration of butanoic acid less than 0.15 mg/g of carob powder, preferably less than 0.10 mg/g, less than 0.5 mg/g and/or a fiber content ranging from 20% to 40% w/w, and/or a fat content ranging from 0.1% to 5% w/w, and/or a sugar content ranging from 30% to 50% w/w, and/or a protein content ranging from 1% to 10% w/w, and/or a low content of caffeine and theobromine and it is also plant-based, allergen-free, high in fiber, and low in fat, and/or a color with a L* parameter of 25 to 35, preferably 30.90, an a* parameter of 5 to 15, preferably 9.04, and a b* parameter of 15 to 25, preferably 19.41, expressed using the CIELAB color system, and/or a 3-furaldehyde concentration lower compared to raw carob, and/or a particle diameter from 0,1 to 100 micron.

In an embodiment, the carob powders of the present invention are obtainable by the method according to the present invention. Preferably, the carob powders of the present invention are obtained by the method according to the present invention.

An object of the present invention is also the use of the carob powder according to the present invention in the preparation of food products or beverages, and in general confectionary products comprising cocoa in their formulations. In a preferred embodiment, said food product or beverage is chocolate, preferably a dark chocolate or a milk chocolate, a cocoa-free chocolate, a vegan cocoa-free chocolate, snacks, biscuits, coatings, fillings, ganaches, mousses, puddings, chocolate drinks.

An object of the present invention is the use of the carob powder according to the present invention as a cocoa powder substitute in the preparation of food products or beverages, and in general confectionary products comprising cocoa in their formulations, preferably a chocolate, a dark chocolate or a milk chocolate, a cocoa-free chocolate, a vegan cocoa-free chocolate, snacks, biscuits, coatings, fillings, ganaches, mousses, puddings, chocolate drinks.

Therefore, object of the present invention is also a food product or beverage comprising the carob powder according to the present invention, preferably wherein said food product or beverage is chocolate, preferably a dark chocolate or a milk chocolate, a cocoa-free chocolate, a vegan cocoa-free chocolate, snacks, biscuits, coatings, fillings, ganaches, mousses, puddings, chocolate drinks.

### EXAMPLES

The carob powder of the present invention is used as an ingredient to produce different types of chocolate that can then be used as such or as an ingredient in different composite foods. It is provided below a list of examples of regular chocolate (recipe and nutritional label), followed by a list of examples of cocoa-free chocolate comprising the carob powder of the present invention (recipe and nutritional label).

### Example regular milk chocolate

### • Milk chocolate

| Ingredients | % |
|---|---|
| Carob | 0-50% |
| Cocoa Butter | 20-50% |
| Sugar/Sweeteners | 15-50% |
| Powdered Skim Milk/Partially skim/Whole Milk | 10-50% |
| Grain extract/flour/malt (oat/rice/barley/millet etc.) | 0-10% |
| Emulsifiers (lecithin etc.) | 0-2% |
| Flavoring ingredients | 0-2% |

### • Vegan Milk chocolate

| Ingredients | % |
|---|---|
| Carob | 0-50% |
| Cocoa Butter | 20-50% |
| Sugar/Sweeteners | 15-50% |
| Grain extract/flour/malt (oat/rice/barley/millet etc.) | 10-50% |
| Emulsifiers (lecithin etc.) | 0-2% |
| Flavoring ingredients | 0-2% |

### Example regular dark chocolate

### • Dark chocolate

| **Ingredients** | **%** |
|---|---|
| Carob | 0-99% |
| Cocoa Butter | 20-5 0% |
| Sugar/Sweeteners | 15-35 % |
| Emulsifiers (lecithin etc.) | 0-2% |
| Flavoring ingredients | 0-2% |

### Example regular white chocolate

### • White chocolate

| **Ingredients** | **%** |
|---|---|
| Cocoa Butter | 20-50% |
| Sugar | 15-5 0% |
| Powdered Skim Milk/Partially skim/Whole Milk | 10-50% |
| Emulsifiers (lecithin etc.) | 0-2% |
| Flavoring ingredients | 0-2% |

### • Vegan White chocolate

| **Ingredients** | **%** |
|---|---|
| Cocoa Butter | 20-5 0% |
| Sugar | 15-5 0% |
| Grain extract/flour/malt (oat/rice/barley/millet etc.) | 10-50% |
| Emulsifiers (lecithin etc.) | 0-2% |
| Flavoring ingredients | 0-2% |

### Example cocoa-free chocolate

### • Vegan Milk cocoa-free chocolate

| **Ingredients** | **%** |
|---|---|
| Carob | 0-50% |
| Vegetables fats | 20-50% |
| Sugar/Sweeteners | 15-50% |
| Grain extract/flour/malt (oat/rice/barley/millet etc.) | 0-40% |
| Emulsifiers (lecithin etc.) | 0-2% |
| Flavoring ingredients | 0-2% |

### • Milk cocoa-free chocolate

| **Ingredients** | **%** |
|---|---|
| Carob | 0-50% |
| Vegetables fats | 20-50% |
| Sugar/Sweeteners | 15-50% |
| Powdered Skim Milk/Partially skim/Whole Milk | 10-35% |
| Grain extract/flour/malt (oat/rice/barley/millet etc.) | 0-10% |
| Emulsifiers (lecithin etc.) | 0-2% |
| Flavoring ingredients | 0-2% |

### • Dark cocoa-free chocolate

| **Ingredients** | **%** |
|---|---|
| Carob | 0-50% |
| Vegetables fats | 20-50% |
| Sugar/Sweeteners | 10-20% |
| Grain extract/flour/malt (oat/rice/barley/millet etc.) | 0-30% |
| Herbs | |
| Emulsifiers (lecithin etc.) | 0-2% |
| Flavoring ingredients | 0-2% |

### • White cocoa-free chocolate

| **Ingredients** | **%** |
|---|---|
| Carob | 0-15% |
| Vegetables fats | 20-5 0% |
| Sugar/Sweeteners | 15-50% |
| Powdered Skim Milk/Partiallv skim/Whole Milk | 10-30% |
| Grain extract/flour/malt (oat/rice/barley/millet etc.) | 0-10% |
| Emulsifiers (lecithin etc.) | 0-2% |
| Flavoring ingredients | 0-2% |

### • Vegan White cocoa-free chocolate

| **Ingredients** | **%** |
|---|---|
| Carob | 0-10% |
| Vegetables fats | 20- 50% |
| Sugar/Sweeteners | 15-50% |
| Grain extract/flour/malt (oat/rice/barley/millet etc.) | 0-40% |
| Emulsifiers (lecithin etc.) | 0-2% |
| Flavoring ingredients | 0-2% |

### Nutritional composition dark and dark-like chocolate variants

| **Energy kcals** | **Protein** | **Fat** | **Carbohydrates** | **Sugar** | **Fiber** |
|---|---|---|---|---|---|
| 450-700 | 0-10 | 35-50 | 10-60 | 10-60 | 1-10 |

### Nutritional composition milk and milk-like chocolate variants

| **Energy kcals** | **Protein** | **Fat** | **Carbohydrates** | **Sugar** | **Fiber** |
|---|---|---|---|---|---|
| 450-700 | 0-10 | 35-50 | 10-60 | 10-60 | 1-10 |

### Nutritional composition dark-like chocolate variants

| **Energy kcals** | **Protein** | **Fat** | **Carbohydrates** | **Sugar** | **Fiber** |
|---|---|---|---|---|---|
| 450-700 | 0-10 | 35-50 | 10-60 | 10-70 | 1-10 |

### MATERIALS & METHODS

### Example of the method of preparing a carob powder

A preferred embodiment of the method for preparing a carob powder comprises the following steps:
1. Coarse grinding of carob pods to obtain carob powder.
2. Addition of water to the carob powder to obtain a semi-liquid mixture.
3. Proteolytic enzymatic treatment of the mixture using food-grade proteases.
4. Incubation of the carob, water, and protease mixture in a controlled temperature and humidity environment.
5. Drying of the mixture to the desired residual moisture content.
6. Roasting of the mixture at different combinations of time and temperature to obtain powders characterized by color, volatile compound profile, and sensory properties similar to cocoa powder.
7. Micronization of the obtained carob powder.

### Alternative 1

1. Addition of water to the carob pulp pieces
2. Proteolytic enzymatic treatment of the mixture using food-grade proteases.
3. Incubation of the carob, water, and protease mixture in a controlled temperature and humidity environment.
4. Drying of the mixture to the desired residual moisture content.
5. Roasting of the mixture at different combinations of time and temperature to obtain powders characterized by color, volatile compound profile, and sensory properties similar to cocoa powder.
6. Micronization of the obtained carob powder to the desired particle size

### Alternative 2

1. Coarse grinding of carob pods to obtain carob powder.
2. Addition of water to the carob powder to obtain a semi-liquid mixture.
3. Incubation of the carob, water mixture in a controlled temperature and humidity environment.
4. Drying of the mixture to the desired residual moisture content.
5. Roasting of the mixture at different combinations of time and temperature to obtain powders characterized by color, volatile compound profile, and sensory properties similar to cocoa powder.
6. Micronization of the obtained carob powder.

### Alternative 3

1. Addition of water to the carob pulp pieces
2. Incubation of the carob, water mixture in a controlled temperature and humidity environment.
3. Drying of the mixture to the desired residual moisture content.
4. Roasting of the mixture at different combinations of time and temperature to obtain powders characterized by color, volatile compound profile, and sensory properties similar to cocoa powder.
5. Micronization of the obtained carob powder.

### Alternative 4

1. Coarse grinding of carob pods to obtain carob powder.
2. Drying of the carob powder to the desired residual moisture content.
3. Roasting of the mixture at different combinations of time and temperature to obtain powders characterized by color, volatile compound profile, and sensory properties similar to cocoa powder.
4. Micronization of the obtained carob powder.

### Alternative 5

1. Drying of the pulp pieces to the desired residual moisture content.
2. Roasting of the mixture at different combinations of time and temperature to obtain powders characterized by color, volatile compound profile, and sensory properties similar to cocoa powder.
3. Micronization of the obtained carob powder.

The carob used in the preparation process is preferably carob commonly used in the food industry, obtained from mature carob pods. The pods are dried to remove some of the moisture, and the seeds are separated from the rest of the fruit to obtain carob pulp. The grinding of the carob pulp in step 1 is done to facilitate the subsequent process steps by maximizing hydration of the contact surface and, consequently, the hydration of carob in step 2 of the preparation process. The particle size of the resulting powder ranges from approximately 0.30 mm to 1.25 mm.

The addition of water in step 2 is done using a carob powder-to-water ratio of 1:3 (25% carob powder, 75% water w/w) to obtain a substrate accessible to the proteolytic enzyme. However, in other embodiments of the invention, the water addition in step 2 can vary from 10% to 90% w/w depending on the application and subsequent preparation steps.

The proteolytic enzyme is dosed at a concentration of approximately 1.0% of the protein content of the carob powder (w/w). The protein content of carob ranges from 2-10% of the total (w/w). In other embodiments of the invention, the proteolytic enzyme is dosed in a concentration range of approximately 0.1-3.0% of the protein content of the carob powder (w/w). The proteolytic enzymes used can include plant proteases, microbial proteases, animal proteases, thermophilic proteases, and alkaline proteases. Various proteolytic enzymes can be added. In particular, the enzyme selected for the purpose of the present invention is alcalase.

A pH correction of the matrix between steps 2 and 3 is carried out to the optimal value for the enzyme's proteolytic activity. In the present case, the corrected pH between steps 2 and 3 is in the range of 6.60-6.80. However, in other embodiments, the post-correction pH range can vary from 6 to 8.

Once added to the water and carob mixture, to determine the effectiveness of its proteolytic function, the enzyme undergoes incubation in a controlled environment at a specific temperature for a certain period of time. The water and carob mixture containing the proteolytic enzyme is incubated at 50-60°C for 60-90 minutes. The enzymatic treatment is conducted through incubation at a constant temperature using a continuous agitation system. At the end of the incubation period, the activity of the proteolytic enzyme is deactivated to stop the proteolytic reaction within the water and carob mixture. The enzyme deactivation can be achieved through various methodologies, including thermal denaturation, use of chemical inhibitors, modification and/or inhibition of key amino acids responsible for the catalytic activity of the enzyme. The proteolytic enzyme is deactivated through thermal denaturation by exposing the water, carob, and enzyme mixture to a temperature of 90-100°C for 5-15 minutes.

After the deactivation phase of the proteolytic enzyme, the water and carob mixture undergo a drying step to remove part of the moisture present in the mixture and obtain a powder with suitable physicochemical characteristics for subsequent preparation stages. This operation is carried out at moderate temperatures to avoid premature modifications in color, aroma, rheological properties, and physicochemical characteristics of the carob-based functional ingredient caused by chemical reactions catalyzed by exposure to high temperatures and reduced water activity (Maillard reaction). To maximize the dehydration of the mixture, the drying process is divided into three consecutive phases:
- Phase 1: Drying for 30-60 minutes at 30-40°C
- Phase 2: Drying for 180-240 minutes at 40-50°C
- Phase 3: Drying for 180-240 minutes at 50-60°C

Following drying, roasting is employed to promote a series of chemical reactions that contribute to the characteristic sensory attributes and color of the carob powder. During the roasting process, high temperatures induce the Maillard reaction, which involves sugars and proteins present in the ingredients. This reaction produces a range of chemical compounds, including aldehydes, ketones, and heterocyclic compounds, responsible for the distinctive aroma and flavor associated with roasting. Furthermore, the roasting process promotes the caramelization of carbohydrates present in the mixture.

The specific combination of time and temperature applied to the carob-based ingredient pre-treated with proteolytic enzymes determines a series of distinct aromatic and sensory properties, as well as an appearance that resembles cocoa powder. This key aspect of the invention is demonstrated through an in-depth analysis of volatile compounds using the headspace solid-phase microextraction gas chromatography mass spectrometry (HS-SPME GC-MS) technique. This analytical method has been applied to detect, quantify, and compare the presence and level of volatile compounds characterizing cocoa in the carob-based ingredients treated with proteolytic enzymes, comparing them with standard commercial references (Figure 3). The ratio between the area measured in GC indicates that the concentration of butanoic acid is very low, and in particular is less than 0.15 mg/g of carob powder, preferably less than 0.10 mg/g or than 0.05 mg/g of carob powder. Moreover, in support of the GC-MS data, sensory analysis and instrumental color analysis have also been performed and considered (Table 1 and 2). A roasting temperature ranging between 100 - 200 C combined with a roasting time ranging between 10 and 100 min provided a vast array of features mimicking different type of cocoas.

At the end of the roasting process, in specific cases the obtained ingredient is micronized and reduced to very fine particles (microns). Cryo-milling is used to micronize the ingredient, whereas according to secondary embodiments of the subject invention other techniques are used to obtain a fine powder including.

Furthermore, in the method for preparing a carob powder ingredient roasting can be applied straight after grinding, according to the following steps:
1. Coarse grinding of the carob to obtain a carob powder
2. Roasting of the blend at different combinations of time and temperature in order to obtain different powders characterized by color, profile of volatile compounds and sensory properties similar to cocoa.
3. Add water to the carob powder in order to obtain a semi-liquid mixture.
4. Proteolytic enzymatic treatment of the mixture using proteases for food use
5. Incubation of the mixture composed of carob, water and protease in a controlled temperature and humidity environment
6. Drying of the mixture up to the desired residual humidity In specific applications, the preparation steps 3, 4, 5 and 6 are left out, and the roasted carob after coarse grinding is directly micronized to reduce the particle size down to microns.

### Sensory smell validation

The triangle test was chosen as discriminant method for determining whether perceptible differences in smell exist between the developed carob powders and two control samples of cocoa powder chosen based on their interesting sensory features and applicability in different product formulations. The panel (65% female and 35% male; age range = 25-33 yr) consisted of employees and collaborators of Foreverland Food Srl. All panelists had previous experience and records of participation in sensory tests happening internally in the company on a weekly basis. A total of 13 panelists took part in the test which lasted in one evaluation session. Of the judges, 100% received proper training in discriminant analysis. Furthermore, 85% of them also had experience with descriptive tests related to smell and odor. Two consecutive triangle tests were carried out to compare the powder ingredients by pairs: CBI versus CONTROL 1 and CBI versus CONTROL 2. During the session the two triangle tests were presented to panelists in a randomized order. 10 grams of each ingredient was poured into transparent plastic-covered cups coded with a 3-digit random number and presented to the panelists in sensory booths under red light, who attempted to discriminate them based on their overall smell and odor.

### Volatile organic compounds (VOCs) characterization

The volatiles organic compounds (VOCs) profile of the developed CBI roasted at different combination of time (range: 10-100 min) and temperature (100-200C) were determined by headspace solid-phase micro-extraction (HS SPME) gas-chromatography mass spectrometry (GC-MS). For the elaboration of the results, data were considered as percentage of total TIC Area (% TIC).

### Color analysis

The color of the developed carob powder was evaluated with a colorimeter (Minolta CM-3500d, Tokyo, Japan). The results were registered by the instrument as CIELAB color system: L* (black: L* = 0 and white: L* = 100), a* (red-green: negative a* = greenness and positive a* = redness), and b* (yellow-blue: negative b* = blueness and positive b* = yellowness). The instrument was internally calibrated with distilled water and an opaque material provided by the manufacturer. Measurements were performed in triplicate using quartz cells with a 1-cm optical path. In parallel, the L*, a* and b* values obtained were compared with the values of two commercially available cocoa powder chosen as standard.

### RESULTS

### Volatile organic compounds (VOCs) characterization

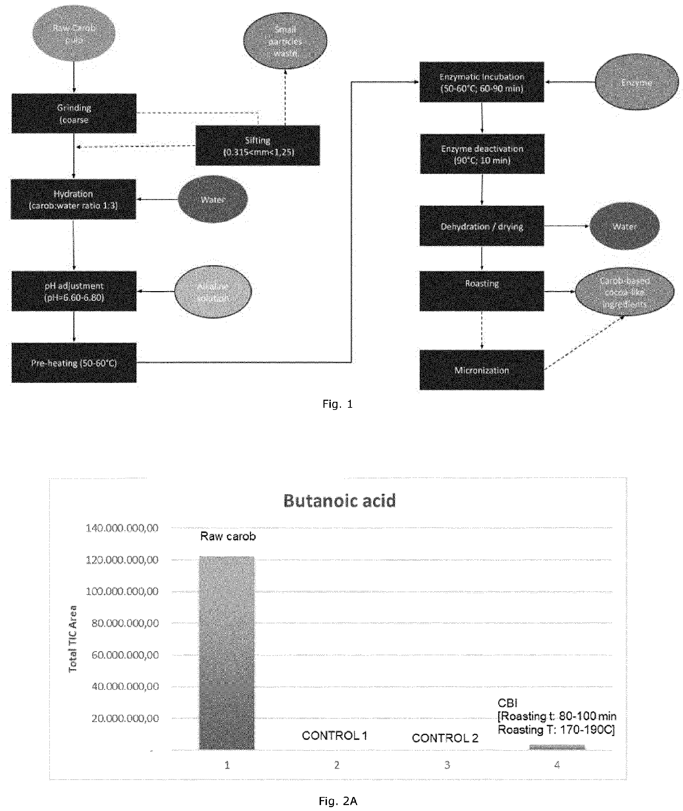

Butanoic acid is pungent flavors to food products. Research describes the odor of the compound as tangy, rancid or cheesy. It occurs naturally in various food products and is responsible for the characteristic smell of rancid butter and parmesan cheese for example, as product of anaerobic fermentation. In cocoa powder however, butanoic acid is undesired because it may alter negatively the sensory properties of the resulting chocolate. As it can be seen from Fig. 2A , raw carob is rich in butanoic acid, whereas both cacaos CONTROL 1 and CONTROL 2 registered an absence or a concentration of butanoic acids below the detection limit in their volatilome. Accordingly, the incubation with water and/or enzymatic treatment applied on carobs combined with a roasting process for 80-100 min at 170-190C resulted in a CBI with a significant lower level of butanoic acids compared to raw carob, down to a level comparable to CONTROL 1 and CONTROL 2. The results were confirmed by an olfactory test performed internally: the resulting CBI was not characterized by a tangy smell, differently from raw carob.

3-Furaldehyde is VOC reported in cocoa. The compounds can provide almond-like odor to food products. As it can be seen from Fig. 2B, raw carob is rich in 3-Furaldehyde, whereas both cocoa CONTROL 1 and CONTROL 2 registered significant lower levels. Accordingly, the enzymatic treatment applied on carobs combined with a roasting process for 80-100 min at 100-120C resulted in a CBI with a significant lower level of 3-Furaldehyde compared to raw carob, down to a level comparable to CONTROL 1 and CONTROL 2.

### Sensory smell validation

Results of the triangle tests showed that no overall difference between CBI and the two considered commercial cocoa powders was perceived by the panel (Table 1): in both cases, more than 2/3 of the panelists provided a wrong answer when they were asked to point out those sample characterized by a different overall smells among the 3 samples assessed in each triangle test.

**Table 1. Results of the triangle tests performed to verify the overall differences and similarities between the invented carob powder (CBI) and two different reference commercial samples of cocoa powder (CONTROL 1 and 2)**

| Sample comparison | Total responses | Correct responses* | Correct responses (%) |
|---|---|---|---|
| CBI vs CONTROL 1 | 13 | 4 | 30% |
| CBI vs CONTROL 2 | 13 | 3 | 23% |

| | | | |
|---|---|---|---|
| * *Correct responses are intended* as *the number of panelists that correctly identified the odd sample in each triangle test.* | | | |

### Color analysis

Results of the colorimetric analysis are reported in Table 2 and show comparable CIELAB values among the invented carob powder and the two standard commercial references of cocoa powder, meaning that the applied combination of enzymatic treatment and roasting led to a similar color development to what is usually happening in cocoa during production.

**Table 2. Results of the color expressed using the CIELAB color system with L* (lightness; range: 0-100, 0 = black and 100 = white), a* (-a*: green color; +a* red color), and b* (-b*blue color; +b* yellow color) registered in the newly invented carob powder (CBI) and two different reference commercial samples of cocoa powder (CONTROL 1 and 2). Measurements were run in triplicate (n=3).**

| Sample | L* | a* | b* |
|---|---|---|---|
| CONTROL 1 | 31.00 ± 0.01 | 13.10 ± 0.04 | 19.30 ± 0.09 |
| CONTROL 2 | 29.00 ± 0.03 | 12.48 ± 0.02 | 16.41 ± 0.01 |
| CBI | 30.90 ± 0.01 | 9.04 ± 0.04 | 19.41 ± 0.02 |

## Claims

1. A method for preparing a carob powder, in particular a carob powder with a low content of butanoic acid, comprising the following steps:
i) incubating carob or carob material in water,
ii) removing water from the product incubated with water in step i);
iii) roasting the product after removing water in step ii).

2. The method according to claim 1, wherein said carob material is carob pulp, carob pieces and/or carob powder.

3. The method according to claim 1 or 2, comprising a further step of micronization, preferably to a particle diameter of said carob or carob material from 0,1 to 100 micron.

4. The method according to any one of claims 1 to 3, wherein said water in step i) is in a weight ratio of carob or carob material/water from 1:0,1 to 1:100, preferably in a ratio of 1:3.

5. The method according to any one of claims 1 to 4, wherein said step i) is carried out at a temperature of at least 30 °C, preferably from 50 to 60°C, and/or a time of at least 5 minutes, preferably from 60 to 90 minutes.

6. The method according to any one of claims 1 to 5, wherein said step of removing water is a step of drying or filtering the product obtained in step i), preferably wherein said of removing water is a step of drying the product incubated with water in step i) at a temperature of less than 70°C, more preferably said drying step comprises the following phases:
i) first drying for a time from 30 to 60 minutes, at a temperature from 30 to 40°C; and
ii) second drying for a time from 180 to 240 minutes at a temperature from 40 to 50°C,
iii) third drying the mixture for a time from 180 to 240 minutes at a temperature from 50 to 60°C.

7. The method according to any one of claims 1 to 6, wherein said roasting step is carried out for a time of at least 10 minutes and/or a temperature of at least 90°C, preferably at least 95°C, more preferably at least 100°C.

8. The method according to anyone of claims 1 to 7, comprising a further step of performing an enzymatic treatment during, before or after the step i) of incubating said carob or carob material in water.

9. The method according to claim 8, wherein said enzymatic treatment is carried out by incubating said carob or carob material in contact with an enzyme mixture.

10. The method according to any one of claims 8 or 9, wherein said enzymatic treatment is a proteolytic enzymatic treatment, preferably an enzyme mixture comprising food-grade proteases, still more preferably said food-grade proteases is alkalase.

11. The method according to anyone of claims 8 to 10, wherein said enzymatic treatment is deactivated by thermal denaturation, chemical inhibitors, modification and/or inhibition of key amino acids responsible for the catalytic activity of the enzyme, preferably by thermal denaturation by exposing the treated carob or carob material in contact with said enzyme mixture, still more preferably said thermal denaturation is carried out at a temperature from 90 to 100°C for a time from 5 to 15 minutes.

12. A carob powder **characterized by** a concentration of butanoic acid less than 0.15 mg/g of carob powder, preferably less than 0.10 mg/g, less than 0.5 mg/g of carob powder.

13. The carob powder according to claim 12, having a particle diameter from 0,1 to 100 micron, and/or a fiber content ranging from 20% to 40% w/w, and/or a fat content ranging from 0.1% to 5% w/w, and/or a sugar content ranging from 30% to 50% w/w, and/or a protein content ranging from 1% to 10% w/w, and/or a color with a L* parameter of 25 to 35, preferably 30.90, an a* parameter of 5 to 15, preferably 9.04, and a b* parameter of 15 to 25, preferably 19.41, expressed using the CIELAB color system.

14. Use of the carob powder according to any one of claims 13 to 15, in the preparation of food products or beverages, preferably as a cocoa powder replacer in the preparation of food products or beverages, more preferably a chocolate, a dark chocolate or a milk chocolate, a cocoa-free chocolate, a vegan cocoa-free chocolate, snacks, biscuits, coatings, fillings, ganaches, mousses, puddings, chocolate drinks.

15. A food product or beverage comprising the carob powder according to anyone of claims 13 to 15, preferably wherein said food product or beverage is chocolate, preferably a dark chocolate or a milk chocolate, a cocoa-free chocolate, a vegan cocoa-free chocolate, snacks, biscuits, coatings, fillings, ganaches, mousses, puddings, chocolate drinks.
